(19)

**Europäisches Patentamt**
**European Patent Office**
**Office européen des brevets**

(11) **EP 4 064 384 B1**

(12) **EUROPEAN PATENT SPECIFICATION**

(45) Date of publication and mention
of the grant of the patent:
**31.12.2025 Bulletin 2026/01**

(21) Application number: **22161197.3**

(22) Date of filing: **09.03.2022**

(51) International Patent Classification (IPC):
*H01M 4/131* (2010.01)    *H01M 4/139* (2010.01)
*H01M 4/485* (2010.01)    *H01M 10/052* (2010.01)
*H01M 10/058* (2010.01)

(52) Cooperative Patent Classification (CPC):
**H01M 4/131; H01M 4/139; H01M 4/485;**
**H01M 10/052; H01M 10/058;** Y02E 60/10

(54) **NEGATIVE ELECTRODE PLATE, ELECTROCHEMICAL DEVICE, AND ELECTRONIC DEVICE**

NEGATIVE ELEKTRODENPLATTE, ELEKTROCHEMISCHE VORRICHTUNG UND
ELEKTRONISCHE VORRICHTUNG

PLAQUE D'ÉLECTRODE NÉGATIVE, DISPOSITIF ÉLECTROCHIMIQUE ET DISPOSITIF
ÉLECTRONIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **25.03.2021 CN 202110322068**

(43) Date of publication of application:
**28.09.2022 Bulletin 2022/39**

(73) Proprietors:
• **Ningde Amperex Technology Ltd.**
**Ningde City, Fujian 352100 (CN)**

• **Dongguan Amperex Technology Limited**
**Dongguan City, Guangdong Province 523000**
**(CN)**

(72) Inventor: **LI, Qinglin**
**Ningde City, Fujian Province, 352100 (CN)**

(74) Representative: **Icosa**
**83 avenue Denfert-Rochereau**
**75014 Paris (FR)**

(56) References cited:
**JP-A- 2018 113 220**

**Description**

**CROSS REFERENCE TO RELATED APPLICATIONS**

This application claims the benefit of priority from the China Patent Application No. 202110322068. 1, filed on 2 July 2021.

**FIELD**

This application relates to the field of electrochemical energy storage, and in particular, to a negative electrode plate, an electrochemical device, and an electronic device.

**BACKGROUND**

With the wide use of electrochemical devices (such as a lithium-ion battery) in various electronic products, users have posed higher requirements on an energy density of the electrochemical devices. Therefore, a silicon-based material is generally used as a negative active material because the silicon-based material possesses a gram capacity of up to 4200 mAh/g. However, the silicon-based material used as the negative active material encounters problems such as large cycle expansion, vulnerability to side reactions with an electrolytic solution, and low conductivity. JP2018113220 discloses a negative electrode comprising a negative electrode current collector and a negative electrode mixture layer which includes a first and a second active material and other components.

Although the current technology for improving the electrochemical devices can overcome the foregoing defects of the silicon-based material to some extent, the improvement is still unable to meet people's higher requirements, and more improvements are urgently needed.

**SUMMARY**

Embodiments of this application provide a negative electrode plate. The negative electrode plate includes a current collector, a first active material layer, and a second active material layer. The first active material layer is located between the current collector and the second active material layer. The first active material layer includes a silicon-based material. The second active material layer includes lithium titanium oxide. An average particle diameter of the lithium titanium oxide is 1 nm to 1500 nm.

In some embodiments, a ratio of a density of the second active material layer to a density of the first active material layer is 0.6 to 0.99. In some embodiments, the density of the second active material layer is 1 g/cm$^3$ to 2 g/cm$^3$, and the density of the first active material layer is 1.5 g/cm$^3$ to 2.1 g/cm$^3$. In some embodiments, a ratio of a specific surface area of the lithium titanium oxide to a specific surface area of the silicon-based material is 3 to 10. In some embodiments, based on a total mass of the second active material layer, a mass percent of the lithium titanium oxide is 20% to 60%. In some embodiments, an average particle diameter of the silicon-based material is 5 $\mu$m to 30 $\mu$m, and a ratio of the average particle diameter of the silicon-based material to the average particle diameter of the lithium titanium oxide is 4 to 800. According to the invention, the silicon-based material includes at least one of silicon, silicon alloy, silicon oxide, or a silicon-carbon composite. In some embodiments, the first active material layer and the second active material layer each further independently include at least one of artificial graphite, natural graphite, mesocarbon microbead, soft carbon, or hard carbon.

Another embodiment of this application provides an electrochemical device. The electrochemical device includes a positive electrode plate, a negative electrode plate, and a separator disposed between the positive electrode plate and the negative electrode plate. The negative electrode plate is any one of the negative electrode plates described above.

An embodiment of this application further provides an electronic device, including the electrochemical device.

In the embodiments of this application, the second active material layer is disposed on the first active material layer containing the silicon-based material. The second active material layer includes lithium titanium oxide. By virtue of a stable structure, the lithium titanium oxide generates almost zero strain during cycles of the electrochemical device, incurs few side reactions with an electrolytic solution, and suppresses reactivity between a silicon-based material particle in the underneath first active material layer and the electrolytic solution, thereby reducing cycle expansion of the electrochemical device. In addition, an average particle diameter of the lithium titanium oxide is 1 nm to 1500 nm. If the average particle diameter of the lithium titanium oxide is exceptionally small, homogeneous dispersion of the lithium titanium oxide will be adversely affected. If the average particle diameter of the lithium titanium oxide is exceptionally large, the polarization of the second active material layer will increase, and the thickness of the second active material layer is required to be relatively large, thereby being adverse to improving the energy density of the electrochemical device.

## DETAILED DESCRIPTION OF EMBODIMENTS

The following embodiments enable a person skilled in the art to understand this application more comprehensively, but without limiting this application in any way.

An embodiment of this application provides a negative electrode plate. The negative electrode plate includes a current collector, a first active material layer, and a second active material layer. The first active material layer is located between the current collector and the second active material layer. In some embodiments, the first active material layer and the second active material layer each may be disposed on one side or two sides of the current collector.

In some embodiments, the first active material layer includes a silicon-based material. The silicon-based material possesses a high gram capacity, thereby helping to increase an energy density of an electrochemical device. In some embodiments, the second active material layer includes lithium titanium oxide. By virtue of a stable structure, the lithium titanium oxide generates almost zero strain during cycles of the electrochemical device, incurs few side reactions with an electrolytic solution, and suppresses the side actions between the silicon-based material in the first active material layer and the electrolytic solution, thereby reducing cycle expansion of the electrochemical device. Specifically, a discharge plateau of the lithium titanium oxide is greater than or equal to 1 V, and a discharge plateau of the silicon-based material is less than or equal to 1 V. Therefore, during the charging, lithium is intercalated in the second active material layer first. Under working conditions of shallow charge of the electrochemical device, the expansion of the electrochemical device containing the silicon-based material can be suppressed effectively. In addition, the lithium intercalation potential of the lithium titanium oxide is relatively high, thereby reducing the probability of forming lithium dendrites caused by lithium plating on the surface of the second active material layer, and improving the safety performance of the electrochemical device.

In some embodiments, the average particle diameter of the lithium titanium oxide is 1 nm to 1500 nm. It needs to be noted that the average particle diameter may be $D_{v50}$. $D_{v50}$ is a value of a particle diameter measured at a cumulative volume of 50% of sample particles in the volume-based particle size distribution by starting from the particles of small diameters. In a case that $D_{v50}$ is hardly available, the average particle diameter of the particles may be calculated based on cross-sectional diameters of the particles. If the average particle diameter of the lithium titanium oxide is exceptionally small, homogeneous dispersion of the lithium titanium oxide will be adversely affected. If the average particle diameter of the lithium titanium oxide is exceptionally large, the polarization of the second active material layer will increase, and the thickness of the second active material layer is required to be relatively large, thereby being adverse to improving the energy density and rate performance of the electrochemical device.

In some embodiments, a ratio of a density of the second active material layer to a density of the first active material layer is 0.6 to 0.99. If the ratio of the density of the second active material layer to the density of the first active material layer is exceptionally low, it indicates that the density of the second active material layer is exceptionally low, thereby being adverse to improving the energy density of the electrochemical device. If the ratio of the density of the second active material layer to the density of the first active material layer is exceptionally high, it indicates that the density of the second active material layer is exceptionally high, thereby being adverse to the entry of the electrolytic solution into the first active material layer and increasing the polarization of lithium ions in the second active material layer. This is adverse to improving the rate performance of the corresponding electrochemical device, and even leads to formation of lithium dendrites. In addition, when the ratio of the density of the second active material layer to the density of the first active material layer is 0.6 to 0.99, the density of the second active material layer is lower than the density of the first active material layer. On the one hand, the relatively low density of the second active material layer can enlarge gaps between particles of the lithium titanium oxide in the second active material layer, thereby helping the electrolytic solution to infiltrate the lithium titanium oxide. In addition, the relatively high density of the first active material layer is conducive to taking advantage of the high gram capacity of the silicon-based material.

In some embodiments, the density of the second active material layer is 1 g/cm³ to 2 g/cm³. The density of the second active material layer, if exceptionally low, is adverse to improving the energy density of the electrochemical device; or, if exceptionally high, is adverse to the entry of the electrolytic solution into the first active material layer and increases the polarization of lithium ions in the second active material layer, thereby being adverse to improving the rate performance of the corresponding electrochemical device and even leading to formation of lithium dendrites. In addition, if the density of the second active material layer is exceptionally high, the particles of the lithium titanium oxide may be crushed during cold pressing. In some embodiments, the density of the first active material layer is 1.5 g/cm³ to 2.1 g/cm³. The density of the first active material layer, if exceptionally low, is adverse to improving the energy density of the electrochemical device; or, if exceptionally high, leads to drastic consumption of the electrolytic solution and also makes the first active material layer fall off the surface of the current collector because the expansion and contraction of the silicon-based material during charging and discharging lead to rupture of the particles. In addition, if the density of the first active material layer is exceptionally high, the particles of the silicon-based material may be crushed during cold pressing.

In some embodiments, a ratio of a specific surface area of the lithium titanium oxide to a specific surface area of the silicon-based material is 3 to 10. If the ratio of the specific surface area of the lithium titanium oxide to the specific surface area of the silicon-based material is exceptionally low, it indicates that the specific surface area of the lithium titanium oxide is exceptionally small or the specific surface area of the silicon-based material is exceptionally large. The exceptionally small specific surface area of the lithium titanium oxide is adverse to sufficient infiltration by the electrolytic solution. The exceptionally large specific surface area of the silicon-based material increases the side reactions between the silicon-based material and the electrolytic solution. If the ratio of the specific surface area of the lithium titanium oxide to the specific surface area of the silicon-based material is exceptionally high, it indicates that the specific surface area of the lithium titanium oxide is exceptionally large or the specific surface area of the silicon-based material is exceptionally small. The exceptionally large specific surface area of the lithium titanium oxide makes it difficult to control the density of the second active material layer to be relatively high and is adverse to homogeneous dispersion of the lithium titanium oxide. The exceptionally small specific surface area of the silicon-based material is adverse to controlling the cycle expansion of the silicon-based material, adverse to lithium ion transmission in the first active material layer, and thereby adverse to improving the rate performance of the electrochemical device. In some embodiments, the relatively large specific surface area of the lithium titanium oxide is conducive to improving the electrolyte retention capability of the negative electrode plate, and the relatively small specific surface area of the silicon-based material reduces the side reactions between the silicon-based material and the electrolytic solution, and improves the cycle performance of the electrochemical device.

In some embodiments, based on a total mass of the second active material layer, a mass percent of the lithium titanium oxide is 20% to 60%. If the mass percent of the lithium titanium oxide is exceptionally low, the effect of the lithium titanium oxide in suppressing the cycle expansion of the silicon-based material and the side reactions between the silicon-based material and the electrolytic solution is relatively limited. If the mass percent of the lithium titanium oxide is exceptionally high, the effects of the lithium titanium oxide in suppressing the cycle expansion of the silicon-based material and the side reactions between the silicon-based material and the electrolytic solution do not increase significantly any more, and adverse effects are brought to the overall bonding performance and conductivity of the second active material layer.

In some embodiments, an average particle diameter of the silicon-based material is 5 $\mu$m to 30 $\mu$m. The average particle diameter of the silicon-based material, if exceptionally small, is adverse to increasing the density of the first active material layer and adverse to homogeneous dispersion of the silicon-based material, and increases the side reactions between the silicon-based material and the electrolytic solution due to the exceptionally large specific surface area in this case. The average particle diameter of the silicon-based material, if exceptionally large, is adverse to suppressing the cycle expansion of the silicon-based material and transmitting lithium ions in the first active material layer.

In some embodiments, the ratio of the average particle diameter of the silicon-based material to the average particle diameter of the lithium titanium oxide is 4 to 800. If the ratio of the average particle diameter of the silicon-based material to the average particle diameter of the lithium titanium oxide is exceptionally low, it indicates that the average particle diameter of the silicon-based material is exceptionally small or the average particle diameter of the lithium titanium oxide is exceptionally large. The exceptionally small average particle diameter of the silicon-based material is adverse to increasing the density of the first active material layer and adverse to homogeneous dispersion of the silicon-based material, and increases the side reactions between the silicon-based material and the electrolytic solution due to the exceptionally large specific surface area in this case. The exceptionally large average particle diameter of the lithium titanium oxide leads to exceptionally small specific surface area of the lithium titanium oxide, and is adverse to infiltrating the lithium titanium oxide with the electrolytic solution. If the ratio of the average particle diameter of the silicon-based material to the average particle diameter of the lithium titanium oxide is exceptionally high, it indicates that the average particle diameter of the silicon-based material is exceptionally large or the average particle diameter of the lithium titanium oxide is exceptionally small. The exceptionally large average particle diameter of the silicon-based material is adverse to suppressing the cycle expansion of the silicon-based material. The exceptionally small average particle diameter of the lithium titanium oxide is adverse to homogeneous dispersion of the lithium titanium oxide.

According to the invention, the silicon-based material includes at least one of silicon, silicon alloy, silicon oxide, or a silicon-carbon composite. Such materials can provide a high gram capacity for the electrochemical device. In some embodiments, the first active material layer further includes at least one of artificial graphite, natural graphite, mesocarbon microbead, soft carbon, or hard carbon. In some embodiments, the second active material layer may include at least one of artificial graphite, natural graphite, mesocarbon microbead, soft carbon, or hard carbon. Such materials may be used as additional active materials in the first active material layer and the second active material layer.

In some embodiments, the second active material layer may further include a modified substance of the lithium titanium oxide (the lithium titanium oxide is used as a substrate, and is doped and coated without changing the spinel structure of the lithium titanium oxide), for example, lithium titanium oxide coated with carbon deposition, and lithium titanium oxide coated with $TiO_2$. The active material is lithium titanium oxide. In some embodiments, the second active material layer may further include a binder and a conductive agent. The binder includes at least one of polyvinylidene difluoride, a vinylidene difluoride-hexafluoropropylene copolymer, polyamide, polyacrylonitrile, polyacrylic ester, polyacrylic acid, sodium polyacrylate, sodium carboxymethyl cellulose, polyvinylpyrrolidone, polyvinyl ether, poly methyl methacrylate, polytetrafluoroethylene, polyhexafluoropropylene, or styrene butadiene rubber. In some embodiments, the mass percent of the binder in the second active material layer is 1% to 20%. In some embodiments, the conductive agent includes at least one of conductive carbon black, carbon nanotubes, carbon fiber, or graphene. In some embodiments, the mass percent of the conductive agent in the second active material layer is 1% to 20%.

In some embodiments, a lithium sheet may be provided on the surface of the negative electrode plate (for example, the surface of the second active material layer) to replenish lithium, so as to make up for the lithium ions that are lost when lithium ions are hardly deintercalatable due to a high potential of the lithium titanium oxide.

In some embodiments, the first active material layer includes a negative active material. In some embodiments, the negative active material includes the silicon-based material. In some embodiments, the first active material layer may further include a conductive agent and a binder. In some embodiments, the conductive agent in the first active material layer may include at least one of conductive carbon black, Ketjen black, graphite flakes, graphene, carbon nanotubes, or carbon fiber. In some embodiments, the binder in the first active material layer may include at least one of carboxymethyl cellulose (CMC), polyacrylic acid, polyvinylpyrrolidone, polyaniline, polyimide, polyamideimide, polysiloxane, styrene butadiene rubber, epoxy resin, polyester resin, polyurethane resin, or polyfluorene. In some embodiments, a mass ratio between the negative active material, the conductive agent, and the binder in the first active material layer may be (80 to 98): (0.1 to 10): (0.1 to 10). Understandably, what is enumerated above is merely an example, and any other appropriate material and mass ratio may apply. In some embodiments, the current collector of the negative electrode plate may be at least one of a copper foil, a nickel foil, or a carbon-based current collector.

An embodiment of this application further provides an electrochemical device. The electrochemical device includes an electrode assembly. The electrode assembly includes a positive electrode plate, a negative electrode plate, and a separator disposed between the positive electrode plate and the negative electrode plate. In some embodiments, the negative electrode plate is any of the negative electrode plates described above.

In some embodiments, the positive electrode plate includes a current collector and a positive active material layer disposed on the current collector. The positive active material layer may include a positive active material. In some embodiments, the positive active material includes at least one of lithium cobalt oxide, lithium iron phosphate, lithium iron manganese phosphate, sodium iron phosphate, lithium vanadium phosphate, sodium vanadium phosphate, lithium vanadyl phosphate, sodium vanadyl phosphate, lithium vanadium oxide, lithium manganese oxide, lithium nickel oxide, lithium nickel cobalt manganese oxide, lithium-rich manganese-based material, or lithium nickel cobalt aluminum oxide. In some embodiments, the positive active material layer may further include a conductive agent. In some embodiments, the conductive agent in the positive active material layer may include at least one of conductive carbon black, Ketjen black, graphite flakes, graphene, carbon nanotubes, or carbon fiber. In some embodiments, the positive active material layer may further include a binder. The binder in the positive active material layer may include at least one of carboxymethyl cellulose (CMC), polyacrylic acid, polyvinylpyrrolidone, polyaniline, polyimide, polyamideimide, polysiloxane, styrene butadiene rubber, epoxy resin, polyester resin, polyurethane resin, or polyfluorene. In some embodiments, a mass ratio of the positive active material, the conductive agent, and the binder in the positive active material layer may be (80 to 99): (0.1 to 10): (0.1 to 10). In some embodiments, the thickness of the positive active material layer may be 10 $\mu$m to 500 $\mu$m. Understandably, the foregoing is merely an example, and the positive active material layer may adopt any other appropriate material, thickness, and mass ratio.

In some embodiments, the current collector of the positive electrode plate may be an aluminum foil, or may be another current collector commonly used in the art. In some embodiments, the thickness of the current collector of the positive electrode plate may be 1 $\mu$m to 50 $\mu$m. In some embodiments, the positive active material layer may be coated on merely a partial region of the current collector of the positive electrode plate.

In some embodiments, the separator includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially the polyethylene and the polypropylene are highly effective in preventing short circuits, and improve stability of the battery through a turn-off effect. In some embodiments, the thickness of the separator is within a range of approximately 5 $\mu$m to 50 $\mu$m.

In some embodiments, a porous layer may be further included in a surface of the separator. The porous layer is disposed on at least one surface of the separator. The porous layer includes inorganic particles and a binder. The inorganic particles is at least one selected from aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), ceria ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, a diameter of a pore of the separator is within a range of approximately 0.01 $\mu$m to 1 $\mu$m. The binder in the porous layer is at least one selected from polyvinylidene difluoride, a vinylidene difluoride-hexafluoropropylene copolymer, a polyamide, polyacrylonitrile, polyacrylic ester, polyacrylic acid, sodium polyacrylate, sodium carboxymethyl cellulose, polyvinylpyrrolidone, polyvinyl ether, poly methyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrode assembly of the electrochemical device is a jelly-roll electrode assembly, a stacked electrode assembly, or a folded electrode assembly. In some embodiments, the positive electrode and/or negative electrode of the electrochemical device may be a multi-layer structure formed by winding or stacking, or may be a single-layer structure formed by stacking a single layer of positive electrode, a separator, and a single layer of negative electrode.

In some embodiments, the electrochemical device includes, but is not limited to, a lithium-ion battery. In some embodiments, the electrochemical device may further include an electrolyte. The electrolyte may be one or more of a gel electrolyte, a solid-state electrolyte, and an electrolytic solution. The electrolytic solution includes a lithium salt and a nonaqueous solvent. The lithium salt is one or more selected from $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. For example, the lithium salt is $LiPF_6$ because it is of a high ionic conductivity and can improve cycle characteristics.

The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the chain carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1, 2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

In some embodiments of this application, using a lithium-ion battery as an example, the lithium-ion battery is prepared by: winding or stacking the positive electrode, the separator, and the negative electrode sequentially into an electrode assembly, putting the electrode assembly into a package such as an aluminum plastic film ready for sealing, injecting an electrolytic solution, and performing chemical formation and sealing; Then a performance test is performed on the prepared lithium-ion battery.

A person skilled in the art understands that the method for preparing the electrochemical device (for example, the lithium-ion battery) described above is merely an example. To the extent not departing from the content disclosed herein, other methods commonly used in the art may be used.

An embodiment of this application further provides an electronic device containing the electrochemical device. The electronic device according to the embodiments of this application is not particularly limited, and may be any electronic device known in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, an unmanned aerial vehicle, a lighting appliance, a toy, a game machine, a watch, an electric tool, a flashlight, a camera, a large household storage battery, a lithium-ion capacitor, or the like.

Some specific embodiments and comparative embodiments are enumerated below to give a clearer description of this application, using a lithium-ion battery as an example.

**Embodiment 1**

Preparing a positive electrode plate: Dissolving lithium cobalt oxide as a positive active material, carbon nanotubes, conductive carbon black, and polyvinylidene difluoride (PVDF) at a mass ratio of 96.2: 0.5: 0.3: 3 in an N-methylpyrrolidone (NMP) solution to form a positive slurry. Using an aluminum foil as a positive current collector, coating the positive current collector with the positive slurry to obtain a positive active material layer, and performing drying, cold pressing, and cutting to obtain a positive electrode plate. The density of the positive active material layer is 4.15 g/cm$^3$.

Preparing a negative electrode plate: Dissolving silicon suboxide as a negative active material, artificial graphite, conductive carbon black, polyacrylic acid as a binder at a mass ratio of 15: 81: 0.6: 3.4 in deionized water to form a first active material layer slurry. Using a 10 μm-thick copper foil as a negative current collector, coating the negative current collector with the first active material layer slurry to obtain a first active material layer. Subsequently, preparing a second active material layer slurry: Dissolving lithium titanium oxide, artificial graphite, conductive carbon black, and styrene butadiene rubber (SBR) as a binder a mass ratio of 20: 78: 0.2: 1.7 in deionized water to form a second active material layer slurry. Coating the first active material layer with the second active material layer slurry to obtain a second active material layer, and performing drying, cold pressing, and cutting to obtain a negative electrode plate. The average particle diameter of the lithium titanium oxide and the artificial graphite in the second active material layer is 0.5 μm. The average particle diameter of the silicon suboxide and the artificial graphite in the first active material layer is 7 μm. The specific surface area of the lithium titanium oxide in the second active material layer is 8 $m^2$/g. The specific surface area of the silicon suboxide in the first active material layer is 2 $m^2$/g. The density (compacted density) of the second active material layer is 1.50 g/$cm^3$. The density (compacted density) of the first active material layer is 1.70 g/$cm^3$.

Preparing a separator: Using a 5 μm-thick polyethylene (PE) substrate as a substrate of the separator, coating both sides of the separator with a 2 μm-thick aluminum oxide ceramic layer, and finally, coating polyvinylidene difluoride (PVDF) in an amount of 2.5 mg/$cm^2$ onto both sides of the separator that are already coated with the ceramic layer, and performing drying.

Preparing an electrolytic solution: Adding $LiPF_6$ into a nonaqueous organic solvent in an environment in which a water content is less than 10 ppm, where the weight ratio between ingredients of the nonaqueous organic solvent is: propylene carbonate (PC): ethylene carbonate (EC): diethyl carbonate (DEC) = 1: 1: 1, and the concentration of the $LiPF_6$ is 1.15 mol/L. Mixing the solution evenly to obtain an electrolytic solution.

Preparing a lithium-ion battery: stacking the positive electrode plate, the separator, and the negative electrode plate sequentially so that the separator is located between the positive electrode plate and the negative electrode plate to serve a function of separation, and winding the stacked materials to obtain an electrode assembly; Putting the electrode assembly in an aluminum plastic film that serves as an outer package, dehydrating the electrode assembly under 80 °C, injecting the electrolytic solution, and performing sealing; and performing steps such as chemical formation, degassing, and edge trimming to obtain a lithium-ion battery.

The steps in the remaining embodiments and comparative embodiments are the same as those in Embodiment 1 except changed parameter values. The specific changed parameter values are shown in the following table.

The following describes the testing method of each parameter in this application.

Specific surface area test:

Determining the amount of a gas adsorbed on the surface of a solid under different relative pressures, and calculating a monolayer adsorption amount of a sample based on the Brunauer-Emmett-Teller adsorption theory and a formula thereof, so as to calculate the specific surface area of the solid.

Weighing out 1.5 to 3.5 grams of powder sample, loading the sample into a TriStar II 3020 test sample tube, degassing the sample at 200 °C for 120 minutes, and then testing the sample.

Testing the capacity of the lithium-ion battery:

Charging a lithium-ion battery at a constant current of 0.2 C under a temperature of 25 °C until the voltage reaches 4.45 V, and then charging the battery at a constant voltage of 4.45 V until the current reaches 0.05 C, and leaving the battery to stand for 5 minutes. Then discharging the battery at a constant current of 1 C until the voltage reaches different cutoff voltages X (X = 2.5 V, 3.0 V, 3.2 V, 3.4 V), and leaving the battery to stand for 2 minutes, whereupon the discharge capacity is the capacity of the lithium-ion battery.

Testing the lithium plating of the negative electrode plate:

Charging a lithium-ion battery under 25 °C at a constant current of Y (Y = 0.5 C, 0.7 C, 1 C, 1.5 C) until the voltage reaches 4.45 V, and then charging the battery at a constant voltage of 4.45 V until the current reaches 0.05 C, and leaving the battery to stand for 2 minutes. Then discharging the battery at a constant current of 1 C until the voltage reaches 3.0 V, and leaving the battery to stand for 2 minutes, thereby completing a cycle. Repeating the test for 10 cycles, and then disassembling the lithium-ion battery to obtain an electrode assembly. Spreading the electrode assembly flat. If lithium plating is detected in any region larger than 2 $mm^2$ on the negative electrode plate, it is determined that the negative electrode plate incurs lithium plating.

EP 4 064 384 B1

Testing the cycle performance:

Charging a lithium-ion battery at a constant current of 1 C under 25 °C until the voltage reaches 4.45 V, and then charging the battery at a constant voltage of 4.45 V until the current reaches 0.05 C, and leaving the battery to stand for 2 minutes. Then discharging the battery at a constant current of 1 C until the voltage reaches different values X (X = 2.5 V, 3.0 V, 3.2 V, 3.4), and leaving the battery to stand for 2 minutes, thereby completing a cycle. Repeating the cycle until the capacity of the lithium-ion battery drops to 80%, whereupon the number of cycles is an indicator of the cycle performance.

Testing the cycle expansion rate:

Charging a lithium-ion battery at a constant current of 0.5 C under a temperature of 25 °C until the voltage reaches 4.45 V, and then charging the battery at a constant voltage of 4.45 V until the current reaches 0.05 C, and leaving the battery to stand for 5 minutes. Then discharging the battery at a constant current of 1 C until the voltage reaches different cutoff voltages X (X = 2.5 V, 3.0 V, 3.2 V, 3.4 V), and leaving the battery to stand for 2 minutes, thereby completing a cycle. Measuring the thickness of the lithium-ion battery at this time as an initial thickness. Repeating the foregoing cycle until the capacity of the lithium-ion battery drops to 80%. Measuring the thickness of the lithium-ion battery at this time as an actual thickness.

Cycle expansion rate = (actual thickness - initial thickness)/initial thickness × 100%.

Testing the energy density:

First, testing the capacity of the lithium-ion battery with reference to the above method, and then measuring the length, width, and height of the lithium-ion battery. Energy density = capacity of the lithium-ion battery/volume of the lithium-ion battery (thickness × width × length).

Table 1 and Table 2 show parameters and evaluation results in Embodiments 1 to 4 and Comparative Embodiments 1 to 2. The discharge cutoff voltage in Embodiments 2 to 4 is different from that in Embodiment 1, and other parameters are the same. In Comparative Embodiments 1 and 2, just the first active material layer is formed on the negative electrode plate, without the second active material layer, and the discharge cutoff voltage is different from that in Embodiment 1.

**Table 1**

| | Mass percent of lithium titanium oxide in second active material layer | Mass percent of silicon-based material in first active material layer | Discharge cutoff voltage (V) | Average particle diameter of lithium titanium oxide ($\mu$m) | Average particle diameter of silicon-based material ($\mu$m) | Specific surface area of lithium titanium oxide ($m^2$/g) | Specific surface area of silicon-based material ($m^2$/g) | Density of second active material layer (g/$cm^3$) | Density of first active material layer (g/$cm^3$) |
|---|---|---|---|---|---|---|---|---|---|
| Embodiment 1 | 20% | 15% | 2.5 | 0.5 | 7 | 8 | 2 | 1.5 | 1.7 |
| Embodiment 2 | 20% | 15% | 3 | 0.5 | 7 | 8 | 2 | 1.5 | 1.7 |
| Embodiment 3 | 20% | 15% | 3.2 | 0.5 | 7 | 8 | 2 | 1.5 | 1.7 |
| Embodiment 4 | 20% | 15% | 3.4 | 0.5 | 7 | 8 | 2 | 1.5 | 1.7 |
| | | | | | | | | | |
| Comparative Embodiment 1 | / | 15% | 3 | / | 7 | / | 2 | / | 1.7 |

8

(continued)

| | Mass percent of lithium titanium oxide in second active material layer | Mass percent of silicon-based material in first active material layer | Discharge cutoff voltage (V) | Average particle diameter of lithium titanium oxide ($\mu$m) | Average particle diameter of silicon-based material ($\mu$m) | Specific surface area of lithium titanium oxide ($m^2$/g) | Specific surface area of silicon-based material ($m^2$/g) | Density of second active material layer (g/$cm^3$) | Density of first active material layer (g/$cm^3$) |
|---|---|---|---|---|---|---|---|---|---|
| Comparative Embodiment 2 | / | 15% | 3.2 | / | 7 | / | 2 | / | 1.7 |
| In the table above, "/" represented none (the same applies below). | | | | | | | | | |

Table 2

| | Capacity of lithium-ion battery (mAh) | Lithium plating level of negative electrode plate | Number of cycles counted when capacity retention rate drops to 80% | Cycle expansion rate | Thickness of lithium-ion battery (mm) | Energy density of lithium-ion battery (Wh/L) |
|---|---|---|---|---|---|---|
| Embodiment 1 | 2800 | 1 C | 300 | 20% | 3.96 | 472 |
| Embodiment 2 | 2400 | 1 C | 500 | 15% | 3.80 | 507 |
| Embodiment 3 | 2200 | 1 C | 800 | 10% | 3.63 | 518 |
| Embodiment 4 | 2000 | 1 C | 300 | 5% | 3.47 | 524 |
| | | | | | | |
| Comparative Embodiment 1 | 2200 | 0.7 C | 500 | 15% | 3.80 | 465 |
| Comparative Embodiment 2 | 2000 | 0.7 C | 800 | 12% | 3.70 | 463 |

As can be seen from comparison between Comparative Embodiments 1 and 2 or comparison between Embodiments 2 and 3, the lithium plating and expansion of the lithium-ion battery are suppressed significantly by increasing the discharge cutoff voltage of the lithium-ion battery.

As can be seen from comparison between Embodiment 2 and Comparative Embodiment 1 or comparison between Embodiment 3 and Comparative Embodiment 2, the added lithium titanium oxide material can make up for the capacity loss caused by a voltage rise when the battery is discharged under a high voltage system, the lithium plating of the negative electrode plate is suppressed to some extent, and the energy density of the lithium-ion battery is increased to some extent.

As can be seen from comparison between Embodiments 1 to 4, by increasing the discharge cutoff voltage of the lithium-ion battery, the capacity of the lithium-ion battery shows a tendency to decrease, the lithium plating level of the negative electrode plate is basically unchanged, and the cycle performance of the lithium-ion battery improves first and then declines. When the discharge cutoff voltage is 3.2 V, the cycle performance is optimal. The cycle expansion rate of the lithium-ion battery shows a tendency to decrease, and the energy density of the lithium-ion battery shows a tendency to increase.

Table 3 and Table 4 show parameters and evaluation results in Embodiments 5 to 9. The average particle diameter of the lithium titanium oxide in Embodiments 5 to 9 is different from that in Embodiment 1.

Table 3

| | Mass percent of lithium titanium oxide in second active material layer | Mass percent of silicon-based material in first active material layer | Discharge cutoff voltage (V) | Average particle diameter of lithium titanium oxide (μm) | Average particle diameter of silicon-based material (μm) | Specific surface area of lithium titanium oxide (m²/g) | Specific surface area of silicon-based material (m²/g) | Density of second active material layer (g/cm³) | Ratio of specific surface area of lithium titanium oxide to specific surface area of silicon-based material | Density of first active material layer (g/cm³) |
|---|---|---|---|---|---|---|---|---|---|---|
| Embodiment 5 | 20% | 15% | 3.2 | 0.005 | 7 | 9.7 | 2 | 1.5 | 4.85 | 1.7 |
| Embodiment 6 | 20% | 15% | 3.2 | 0.1 | 7 | 8.5 | 2 | 1.5 | 4.25 | 1.7 |
| Embodiment 7 | 20% | 15% | 3.2 | 0.5 | 7 | 8 | 2 | 1.5 | 4 | 1.7 |
| Embodiment 8 | 20% | 15% | 3.2 | 1.5 | 7 | 7.8 | 2 | 1.5 | 3.9 | 1.7 |
| Embodiment 9 | 20% | 15% | 3.2 | 3 | 7 | 5.8 | 2 | 1.5 | 2.9 | 1.7 |

**Table 4**

|  | Capacity of lithium-ion battery (mAh) | Lithium plating level of negative electrode plate | Number of cycles counted when capacity retention rate drops to 80% | Cycle expansion rate | Energy density of lithium-ion battery (Wh/L) |
|---|---|---|---|---|---|
| Embodiment 5 | 2200 | 1 C | 500 | 16% | 548 |
| Embodiment 6 | 2200 | 1 C | 500 | 15% | 553 |
| Embodiment 7 | 2200 | 1 C | 300 | 12% | 509 |
| Embodiment 8 | 2200 | 1 C | 500 | 10% | 518 |
| Embodiment 9 | 2200 | 0.7 C | 800 | 10% | 518 |

As can be seen from comparison between Embodiments 5 to 9, as the average particle diameter of the lithium titanium oxide increases: the capacity of the lithium-ion battery is basically unchanged; the lithium plating of the negative electrode plate is aggravated when the average particle diameter of the lithium titanium oxide is larger than 1500 nm and when the ratio of the specific surface area of the lithium titanium oxide to the specific surface area of the silicon-based material is less than 3; the cycle performance of the lithium-ion battery declines first and then improves; the cycle expansion rate of the lithium-ion battery decreases first and then keeps steady; and the energy density of the lithium-ion battery increases first and then decreases, and then increases and keeps steady.

Table 5 and Table 6 show parameters and evaluation results in Embodiments 10 to 14. The average particle diameter of the silicon-based material in Embodiments 10 to 14 is different from that in Embodiment 1.

**Table 5**

| | Mass percent of lithium titanium oxide in second active material layer | Mass percent of silicon-based material in first active material layer | Discharge cutoff voltage (V) | Average particle diameter of lithium titanium oxide ($\mu$m) | Average particle diameter of silicon-based material ($\mu$m) | Specific surface area of lithium titanium oxide ($m^2$/g) | Specific surface area of silicon-based material ($m^2$/g) | Ratio of specific surface area of lithium titanium oxide to specific surface area of silicon-based material | Density of second active material layer (g/$cm^3$) | Density of first active material layer (g/$cm^3$) |
|---|---|---|---|---|---|---|---|---|---|---|
| Embodiment 10 | 20% | 15% | 3.2 | 0.5 | 3 | 8 | 6 | 1.3 | 1.5 | 1.7 |
| Embodiment 11 | 20% | 15% | 3.2 | 0.5 | 5 | 8 | 5.3 | 1.51 | 1.5 | 1.7 |
| Embodiment 12 | 20% | 15% | 3.2 | 0.5 | 20 | 8 | 2.6 | 3.07 | 1.5 | 1.7 |
| Embodiment 13 | 20% | 15% | 3.2 | 0.5 | 30 | 8 | 2 | 4 | 1.5 | 1.7 |
| Embodiment 14 | 20% | 15% | 3.2 | 0.5 | 35 | 8 | 1.7 | 4.44 | 1.5 | 1.7 |

**Table 6**

|  | Capacity of lithium-ion battery (mAh) | Lithium plating level of negative electrode plate | Number of cycles counted when capacity retention rate drops to 80% | Cycle expansion rate | Energy density of lithium-ion battery (Wh/L) |
|---|---|---|---|---|---|
| Embodiment 10 | 2200 | 0.5 C | 400 | 14% | 500 |
| Embodiment 11 | 2200 | 0.5 C | 600 | 12% | 509 |
| Embodiment 12 | 2200 | 1 C | 800 | 10% | 518 |
| Embodiment 13 | 2200 | 1 C | 600 | 12% | 509 |
| Embodiment 14 | 2200 | 0.5 C | 600 | 13% | 504 |

As can be seen from comparison between Embodiments 10 to 14, as the average particle diameter of the silicon-based material increases: the capacity of the lithium-ion battery is basically unchanged; the cycle performance of the lithium-ion battery improves first and then declines; the cycle expansion rate of the lithium-ion battery decreases first and then increases; and the lithium plating of the negative electrode plate is aggravated when the ratio of the specific surface area of the lithium titanium oxide to the specific surface area of the silicon-based material is less than 3 or when the average particle diameter of the silicon-based material is smaller than 5 $\mu$m or larger than 30 $\mu$m. The energy density of the lithium-ion battery increases first and then decreases.

Table 7 and Table 8 show parameters and evaluation results in Embodiments 3 and 15 to 17. The mass percent of the lithium titanium oxide in the second active material layer in Embodiments 3 and 15 to 17 is different from that in Embodiment 1. The content of artificial graphite is adjusted, and the aggregate content of the active material in the second active material layer remains unchanged.

**Table 7**

|  | Mass percent of lithium titanium oxide in second active material layer | Mass percent of silicon-based material in first active material layer | Discharge cutoff voltage (V) | Average particle diameter of lithium titanium oxide ($\mu$m) | Average particle diameter of silicon-based material ($\mu$m) | Specific surface area of lithium titanium oxide (m$^2$/g) | Specific surface area of silicon-based material (m$^2$/g) | Density of second active material layer (g/cm$^3$) | Density of first active material layer (g/cm$^3$) |
|---|---|---|---|---|---|---|---|---|---|
| Embodiment 3 | 20% | 15% | 3.2 | 0.5 | 7 | 8 | 2 | 1.5 | 1.7 |
| Embodiment 15 | 40% | 15% | 3.2 | 0.5 | 7 | 8 | 2 | 1.5 | 1.7 |
| Embodiment 16 | 60% | 15% | 3.2 | 0.5 | 7 | 8 | 2 | 1.5 | 1.7 |
| Embodiment 17 | 100% | 15% | 3.2 | 0.5 | 7 | 8 | 2 | 1.5 | 1.7 |

**Table 8**

|  | Capacity of lithium-ion battery (mAh) | Lithium plating level of negative electrode plate | Number of cycles counted when capacity retention rate drops to 80% | Cycle expansion rate | Energy density of lithium-ion battery (Wh/L) |
|---|---|---|---|---|---|
| Embodiment 3 | 2200 | 1 C | 800 | 10% | 518 |
| Embodiment 15 | 1800 | 1 C | 800 | 8% | 432 |

(continued)

| | Capacity of lithium-ion battery (mAh) | Lithium plating level of negative electrode plate | Number of cycles counted when capacity retention rate drops to 80% | Cycle expansion rate | Energy density of lithium-ion battery (Wh/L) |
|---|---|---|---|---|---|
| Embodiment 16 | 1500 | 1 C | 600 | 8% | 360 |
| Embodiment 17 | 1200 | 1 C | 500 | 8% | 288 |

As can be seen from comparison between Embodiments 3 and 15 to 17, as the mass percent of the lithium titanium oxide in the second active material layer increases: the capacity of the lithium-ion battery shows a tendency to decrease; the lithium plating level of the negative electrode plate is basically unchanged; the cycle performance of the lithium-ion battery shows a tendency to decline; the cycle expansion rate of the lithium-ion battery decreases first and then keeps basically unchanged; the energy density of the lithium-ion battery shows a tendency to decrease; and the energy density decreases severely when the mass percent of the lithium titanium oxide in the second active material layer is higher than 60%.

Table 9 and Table 10 show parameters and evaluation results in Embodiments 18 to 22. The density of the first active material layer and the density of the second active material layer in Embodiments 18 to 22 are different from those in Embodiment 1.

**Table 9**

| | Mass percent of lithium titanium oxide in second active material layer | Mass percent of silicon-based material in first active material layer | Discharge cutoff voltage (V) | Average particle diameter of lithium titanium oxide ($\mu$m) | Average particle diameter of silicon-based material ($\mu$m) | Specific surface area of lithium titanium oxide ($m^2$/g) | Specific surface area of silicon-based material ($m^2$/g) | Density of second active material layer (g/$cm^3$) | Density of first active material layer (g/$cm^3$) |
|---|---|---|---|---|---|---|---|---|---|
| Embodiment 18 | 20% | 15% | 3.2 | 0.5 | 7 | 8 | 2 | 1 | 1.7 |
| Embodiment 19 | 20% | 15% | 3.2 | 0.5 | 7 | 8 | 2 | 1.8 | 1.7 |
| Embodiment 20 | 20% | 15% | 3.2 | 0.5 | 7 | 8 | 2 | 1.5 | 1.7 |
| Embodiment 21 | 20% | 15% | 3.2 | 0.5 | 7 | 8 | 2 | 1.5 | 1 |
| Embodiment 22 | 20% | 15% | 3.2 | 0.5 | 7 | 8 | 2 | 1.5 | 2 |

**Table 10**

| | Capacity of lithium-ion battery (mAh) | Lithium plating level of negative electrode plate | Number of cycles counted when capacity retention rate drops to 80% | Cycle expansion rate | Energy density of lithium-ion battery (Wh/L) |
|---|---|---|---|---|---|
| Embodiment 18 | 2020 | 1 C | 600 | 12% | 463 |
| Embodiment 19 | 2280 | 0.5 C | 800 | 10% | 537 |
| Embodiment 20 | 2200 | 1 C | 800 | 10% | 518 |
| Embodiment 21 | 2000 | 1 C | 800 | 12% | 452 |

(continued)

|  | Capacity of lithium-ion battery (mAh) | Lithium plating level of negative electrode plate | Number of cycles counted when capacity retention rate drops to 80% | Cycle expansion rate | Energy density of lithium-ion battery (Wh/L) |
|---|---|---|---|---|---|
| Embodiment 22 | 2340 | 0.5 C | 800 | 10% | 551 |

As can be seen from comparison between Embodiments 18 to 22, no matter whether the density of the first active material layer or the density of the second active material layer is increased, the energy density of the electrochemical device will be increased. However, after the density is increased, the lithium plating of the negative electrode plate will be aggravated considerably. If the density is decreased, the lithium plating of the negative electrode plate will be suppressed, but the energy density of the electrochemical device will decrease significantly.

The foregoing descriptions are merely about exemplary embodiments of this application and the technical principles applied. A person skilled in the art understands that the scope of disclosure in this application is not limited to the technical solutions formed by a specific combination of the foregoing technical features, but also covers other technical solutions formed by arbitrarily combining the foregoing technical features or equivalents thereof, for example, a technical solution formed by replacing any of the foregoing features with a technical feature disclosed herein and serving similar functions.

## Claims

1.  A negative electrode plate, comprising:

    a current collector;
    a first active material layer comprising a silicon-based material, wherein the silicon-based material comprises at least one of silicon, silicon alloy, silicon oxide, or a silicon-carbon composite; and
    a second active material layer comprising lithium titanium oxide, wherein the first active material layer is located between the current collector and the second active material layer, and an average particle diameter of the lithium titanium oxide is 1 nm to 1500 nm.

2.  The negative electrode plate according to claim **1,** wherein a ratio of a density of the second active material layer to a density of the first active material layer is 0.6 to 0.99.

3.  The negative electrode plate according to claim **2,** wherein the density of the second active material layer is 1 g/cm$^3$ to 2 g/cm$^3$, and the density of the first active material layer is 1.5 g/cm$^3$ to 2.1 g/cm$^3$.

4.  The negative electrode plate according to claim **1,** wherein a ratio of a specific surface area of the lithium titanium oxide to a specific surface area of the silicon-based material is 3 to 10, wherein the specific surface areas are calculated according to the Brunauer-Emmett-Teller adsorption theory.

5.  The negative electrode plate according to claim **1,** wherein, based on a total mass of the second active material layer, a mass percent of the lithium titanium oxide is 20% to 60%.

6.  The negative electrode plate according to claim **1,** wherein an average particle diameter of the silicon-based material is 5 $\mu$m to 30 $\mu$m, and a ratio of the average particle diameter of the silicon-based material to the average particle diameter of the lithium titanium oxide is 4 to 800.

7.  The negative electrode plate according to claim **1,** wherein the first active material layer and the second active material layer each further independently comprise at least one of artificial graphite, natural graphite, mesocarbon microbead, soft carbon, or hard carbon.

8.  An electrochemical device, comprising:

    a positive electrode plate;
    a negative electrode plate; and

a separator, disposed between the positive electrode plate and the negative electrode plate,
wherein, the negative electrode plate is the negative electrode plate according to any one of claims **1** to **7.**

9. An electronic device, comprising the electrochemical device according to claim **8.**

**Patentansprüche**

1. Negative Elektrodenplatte, umfassend:

einen Stromabnehmer;
eine erste Aktivmaterialschicht, die ein siliziumbasiertes Material umfasst, wobei das siliziumbasierte Material mindestens eines aus Silizium, einer Siliziumlegierung, Siliziumoxid oder einem Silizium-Kohlenstoff-Verbundstoff umfasst; und
eine zweite Aktivmaterialschicht, die Lithium-Titanoxid umfasst, wobei sich die erste Aktivmaterialschicht zwischen dem Stromabnehmer und der zweiten Aktivmaterialschicht befindet und ein durchschnittlicher Partikeldurchmesser des Lithium-Titanoxids 1 nm bis 1500 nm beträgt.

2. Negative Elektrodenplatte nach Anspruch 1, wobei ein Verhältnis einer Dichte der zweiten Aktivmaterialschicht zu einer Dichte der ersten Aktivmaterialschicht 0,6 bis 0,99 beträgt.

3. Negative Elektrodenplatte nach Anspruch **2,** wobei die Dichte der zweiten Aktivmaterialschicht 1 g/cm$^3$ bis 2 g/cm$^3$ beträgt und die Dichte der ersten Aktivmaterialschicht 1,5 g/cm$^3$ bis 2,1 g/cm$^3$ beträgt.

4. Negative Elektrodenplatte nach Anspruch **1,** wobei ein Verhältnis eines spezifischen Oberflächenbereichs des Lithium-Titanoxids zu einem spezifischen Oberflächenbereich des siliziumbasierten Materials 3 bis 10 beträgt, wobei die spezifischen Oberflächenbereiche nach der Brunauer-Emmett-Teller-Adsorptionstheorie berechnet werden.

5. Negative Elektrodenplatte nach Anspruch **1,** wobei, basierend auf einer Gesamtmasse der zweiten Aktivmaterialschicht, ein Massenprozentsatz des Lithium-Titanoxids 20 % bis 60 % beträgt.

6. Negative Elektrodenplatte nach Anspruch **1,** wobei ein durchschnittlicher Partikeldurchmesser des siliziumbasierten Materials 5 $\mu$m bis 30 $\mu$m beträgt und ein Verhältnis des durchschnittlichen Partikeldurchmessers des siliziumbasierten Materials zu dem durchschnittlichen Partikeldurchmesser des Lithium-Titanoxids 4 bis 800 beträgt.

7. Negative Elektrodenplatte nach Anspruch **1,** wobei die erste Aktivmaterialschicht und die zweite Aktivmaterialschicht j eweils unabhängig voneinander mindestens eines aus künstlichem Graphit, Naturgraphit, Mesokohlenstoff-Mikroperlen, weichem Kohlenstoff oder hartem Kohlenstoff umfassen.

8. Elektrochemische Vorrichtung, umfassend:

eine positive Elektrodenplatte;
eine negative Elektrodenplatte; und
einen Separator, der zwischen der positiven Elektrodenplatte und der negativen Elektrodenplatte angeordnet ist,
wobei die negative Elektrodenplatte die negative Elektrodenplatte nach einem der Ansprüche **1** bis **7** ist.

9. Elektronische Vorrichtung, die die elektrochemische Vorrichtung nach Anspruch **8** umfasst.

**Revendications**

1. Plaque d'électrode négative, comprenant :

un collecteur de courant ;
une première couche de matériau actif comprenant un matériau à base de silicium, dans laquelle le matériau à base de silicium comprend au moins l'un parmi le silicium, un alliage de silicium, l'oxyde de silicium ou un composite silicium-carbone ; et
une deuxième couche de matériau actif comprenant de l'oxyde de titane et de lithium, dans laquelle la première couche de matériau actif est située entre le collecteur de courant et la deuxième couche de matériau actif, et le diamètre moyen des particules de l'oxyde de titane et de lithium est de 1 nm à 1 500 nm.

2. Plaque d'électrode négative selon la revendication **1,** dans laquelle le rapport entre la densité de la deuxième couche de matériau actif et la densité de la première couche de matériau actif est de 0,6 à 0,99.

3. Plaque d'électrode négative selon la revendication **2,** dans laquelle la densité de la deuxième couche de matériau actif est de 1 g/cm$^3$ à 2 g/cm$^3$, et la densité de la première couche de matériau actif est de 1,5 g/cm$^3$ à 2,1 g/cm$^3$.

4. Plaque d'électrode négative selon la revendication **1,** dans laquelle le rapport entre la surface spécifique de l'oxyde de titane et de lithium et la surface spécifique du matériau à base de silicium est de 3 à 10, dans lequel les surfaces spécifiques sont calculées selon la théorie d'adsorption de Brunauer-Emmett-Teller.

5. Plaque d'électrode négative selon la revendication **1,** dans laquelle, sur la base d'une masse totale de la deuxième couche de matériau actif, le pourcentage massique d'oxyde de lithium et de titane est de 20 % à 60 %.

6. Plaque d'électrode négative selon la revendication **1,** dans laquelle le diamètre moyen des particules du matériau à base de silicium est de 5 $\mu$m à 30 $\mu$m, et le rapport entre le diamètre moyen des particules du matériau à base de silicium et le diamètre moyen des particules d'oxyde de lithium et de titane est de 4 à 800.

7. Plaque d'électrode négative selon la revendication **1,** dans laquelle la première couche de matériau actif et la deuxième couche de matériau actif comprennent en outre chacune indépendamment au moins l'un parmi le graphite artificiel, le graphite naturel, les microbilles de mésocarbone, le carbone tendre, ou le carbone dur.

8. Dispositif électrochimique, comprenant :

   une plaque d'électrode positive ;
   une plaque d'électrode négative ; et
   un séparateur, disposé entre la plaque d'électrode positive et la plaque d'électrode négative,
   dans lequel la plaque d'électrode négative est la plaque d'électrode négative selon l'une quelconque des revendications **1** à **7.**

9. Dispositif électronique comprenant le dispositif électrochimique selon la revendication **8.**

**EP 4 064 384 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110322068

- JP 2018113220 B